# EUROPÄISCHE PATENTANMELDUNG

(11) **EP 4 375 263 A1**
(43) Veröffentlichungstag der Anmeldung: **29.05.2024**
(21) Anmeldenummer: 22209346.0
(22) Anmeldetag: 24.11.2022
(51) Int. Cl.: C04B 40/06, C08G 18/32, C08G 18/38, C08G 18/72, C08G 18/78, C08G 18/79, C09J 175/02

(54) **MEHRKOMPONENTEN-HARZSYSTEM UMFASSEND ISOCYANAT, DMTDA UND DETDA**

(71) Anmelder: Hilti Aktiengesellschaft, 9494 Schaan (LI)
(72) Erfinder: Plenk, Christian, 86916 Kaufering (DE); Bürgel, Thomas, 86899 Landsberg (DE); Kumru, Memet-Emin, 86199 Augsburg (DE)
(74) Vertreter: Hilti Aktiengesellschaft Corporate Intellectual Property

(57) **Zusammenfassung**

Die vorliegende Erfindung betrifft ein Mehrkomponenten-Harzsystem umfassend (i) mindestens eine Isocyanatkomponente (A) umfassend mindestens ein aliphatisches oder cycloaliphatisches Polyisocyanat mit einer mittleren NCO-Funktionalität von etwa 2 oder größer und (ii) mindestens eine Härterkomponente (B) umfassend Diethyltoluoldiamin (DETDA) und ein Isomerengemisch aus 6-Methyl-2,4-bis(methylthio)phenylen-1,3-diamin und 2-Methyl-4,6-bis(methylthio)phenylen-1,3-diamin (DMTDA).

## Beschreibung

Die vorliegende Erfindung betrifft ein Mehrkomponenten-Harzsystem umfassend (i) mindestens eine Isocyanatkomponente (A) umfassend mindestens ein aliphatisches oder cycloaliphatisches Polyisocyanat mit einer mittleren NCO-Funktionalität von etwa 2 oder größer und (ii) mindestens eine Härterkomponente (B) umfassend Diethyltoluoldiamin (DETDA) und ein Isomerengemisch aus 6-Methyl-2,4-bis(methylthio)phenylen-1,3-diamin und 2-Methyl-4,6-bis(methylthio)phenylen-1,3-diamin (DMTDA). Die Verwendung des DETDA zusätzlich zum DMTDA bewirkt, dass bei einer Untergrundtemperatur deutlich unterhalb von 23°C (beispielsweise bei -5°C oder -10°C) eine höhere Verbundspannung erzielt wird, als dies mit einem Vergleichs-Mehrkomponenten-Harzsystem, in welchem das DETDA fehlt (welches beispielsweise nur DMTDA als Härter umfasst), der Fall ist. Dadurch wird es möglich, eine Untergrundtemperatur, bei der noch 90% der Verbundspannung bei einer Untergrundtemperatur von 23°C erreicht werden, zu erzielen, welche niedriger ist als in einen Vergleichs-Mehrkomponenten-Harzsystem, in welchem das DETDA fehlt. Dadurch wird also ein Einsatz bei niedrigen Temperaturen und sogar Minusgraden besser möglich. Die vorliegende Erfindung betrifft ferner die Verwendung eines derartigen Mehrkomponenten-Harzsystems zur chemischen Befestigung von Konstruktionselementen in Vertiefungen, insbesondere Löchern (beispielsweise Bohrlöchern) oder Spalten, sowie die Verwendung als Klebstoff.

Im Bauwesen werden Harzsysteme zur chemischen Befestigung von Konstruktionselementen, wie beispielsweise Ankerstangen, Bewehrungseisen und Schrauben, in Bohrlöchern oder Spalten von Bauwerken eingesetzt. Derartige Harzsysteme werden auch als "chemische Dübel" bezeichnet, wobei ein chemischer Dübel in der Regel eine Mörtelmasse ist, also neben den das Harz bildenden Komponenten des Harzsystems noch Füllstoff enthält. Gleichermaßen spielen Harzsysteme eine wichtige Rolle für die Verwendung als Klebstoff.

Diese Harzsysteme können als einheitliche Harzmasse vorliegen, oder als System aus mehreren Komponenten. Üblicherweise sind Harzsysteme kommerziell als ein Mehrkomponenten-Harzsystem erhältlich. Unter einem Mehrkomponenten-Harzsystem ist ein Harzsystem mit mehreren Komponenten, typischerweise zwei Komponenten (ZweiKomponenten-System), mit (i) mindestens einer Komponente (A) umfassend eine härtbare Verbindung, und (ii) mindestens einer Härterkomponente (B) umfassend einen Härter für besagte härtbare Verbindung, sowie gegebenenfalls weiteren separaten Komponenten zu verstehen. Die Komponenten befinden sich in separaten Behältern, so dass sie während der Lagerung und vor der Anwendung nicht miteinander in Berührung kommen und nicht miteinander reagieren können. Zur bestimmungsgemäßen Verwendung eines Mehrkomponenten-Harzsystems werden die Komponenten (A) und (B) und gegebenenfalls weitere Komponenten am gewünschten Einsatzort vermischt, so dass dort die Härtungsreaktion stattfinden kann.

Zur Aufbewahrung vor der Nutzung eignen sich Patronen, beispielsweise aus Kunststoff, Keramik oder Glas, in denen die Komponenten durch zerstörbare Abgrenzungswandungen oder integrierte separate zerstörbare Behältnisse voneinander getrennt angeordnet sind; beispielsweise als ineinander verschachtelte Patronen, bevorzugt Zweikammerpatronen. Zur Aufbewahrung vor der Nutzung sind aber insbesondere Mehr- oder bevorzugt Zweikomponentenkartuschen üblich, in deren Kammern die Komponenten (A) und (B) eines Mehrkomponenten-Harzsystems getrennt voneinander enthalten sind. Durch Zerstörung der Abgrenzungen in den Patronen bzw. Ausdrücken der Kartuschen durch beispielsweise einen Statikmischer hindurch werden die beiden oder mehreren Komponenten vermischt. Dadurch wird eine Härtungsreaktion, d.h. eine Polymerisation, in Gang gebracht und das Harz gehärtet.

In einem Mehrkomponenten-Harzsystem können andere, übliche Bestandteile, wie beispielsweise Füllstoffe, Additive, Beschleuniger, Inhibitoren, Rheologieadditive, Lösungsmittel und Reaktivverdünner, in einer oder beiden Komponenten (A) und/oder (B), sowie optional weiteren Komponenten enthalten sein. Mehrkomponenten-Harzsysteme können gegebenenfalls auch Füllstoffe enthalten, welche selbst durch hydraulisches Abbinden zur Verfestigung beitragen können, wie im Falle von Zement.

Als chemische Dübel sind vor allem Mehrkomponenten-Harzsysteme auf der Basis von Methacrylatharzen sowie auf der Basis von Epoxidharzen bekannt. Diese Harzsysteme eignen sich jedoch oft nur beschränkt für den Einsatz bei niedrigen Temperaturen, also Temperaturen, welche unterhalb von 23 °C oder sogar unterhalb von 0°C liegen. Für Einsätze in kalten Regionen bzw. bei kalten Umgebungstemperaturen besteht daher ein Bedarf für hierfür besser geeignete Harzsysteme.

Neben der Weiterentwicklung und Verbesserung der bestehenden Mehrkomponenten-Harzsysteme werden daher zunehmend auch andere als die vorgenannten Harzsysteme auf ihre Eignung als Basis für chemische Dübel untersucht. Zunehmend werden Polyurethane und Polyharnstoffe, also Polymere auf Polyisocyanatbasis, als Harze für chemische Dübel in Betracht gezogen.

So beschreibt die EP 3 447 078 A1 einen chemischen Dübel, der aus einer Mehrkomponentenmasse hergestellt wird, welcher eine Polyisocyanatkomponente (A) und eine Polyasparaginsäureesterkomponente (B) umfasst. Bei Vermischen der beiden Komponenten entsteht in einer Polyadditionsreaktion Polyharnstoff, welcher das Harz als Bindemittel der Mörtelmasse bildet.

Aus der DE 10 2008 018 861 A1 sind Mehrkomponenten-Systeme auf der Grundlage von Polyurethanen bekannt, die aus einem oder mehreren Di- und/oder Polyisocyanaten, einem oder mehreren Di- und/oder Polyolen oder Di- und/oder Polyaminen oder einer oder mehreren di- und/oder polyfunktionellen Amino-, Hydroxy- und/oder Amino- und Hydroxyverbindungen gebildet sind.

Aufgabe der vorliegenden Erfindung ist es, ein Mehrkomponenten-Harzsystem auf Basis von Polyisocyanat zur Verfügung zu stellen, welche für Befestigungszwecke geeignet ist. Eine aus einem solchen Mehrkomponenten-Harzsystem erzeugte Mörtelmasse soll im Vergleich zu herkömmlichen chemischen Dübeln bei niedrigeren Temperaturen einsetzbar sein, vorteilhafterweise bei vergleichbar hoher Auszugsfestigkeit unter Referenzbedingungen. Insbesondere ist es Aufgabe der vorliegenden Erfindung, eine Mörtelmasse auf Basis von Polyisocyanaten zur Verfügung zu stellen, die eine verbesserte Auszugsfestigkeit (ausgedrückt als Verbundspannung bzw. Auszugskraft) bei niedrigen Temperaturen, insbesondere bei Temperaturen unterhalb von 0°C wie beispielsweise -5°C oder -10 °C, zeigt.

Diese Aufgabe wird gelöst durch das in den Ansprüchen definierte Mehrkomponenten-Harzsystem und dessen hierin beschriebene Verwendung.

Bevorzugte Ausführungsformen sind in den Unteransprüchen angegeben, die wahlweise miteinander kombiniert werden können.

Gegenstand der Erfindung ist ein Mehrkomponenten-Harzsystem umfassend:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B).

Die Aminkomponente (B) umfasst
- Diethyltoluoldiamin (DETDA) und
- ein Isomerengemisch aus 6-Methyl-2,4-bis(methylthio)phenylen-1,3-diamin und 2-Methyl-4,6-bis(methylthio)phenylen-1,3-diamin (DMTDA).

Das DMTDA und das DETDA liegen in einem Mengenverhältnis (DMTDA:DETDA) von etwa 17:1 bis etwa 1:1 (w/w) vor. Bevorzugt beträgt das Mengenverhältnis (DMTDA:DETDA) von etwa 15:1 bis etwa 1:1 (w/w), bevorzugter von etwa 12:1 bis etwa 1,5:1 (w/w), bevorzugter von etwa 10:1 bis etwa 1,5:1 (w/w), noch bevorzugter von etwa 6:1 bis etwa 1,5:1 (w/w).

Bevorzugt sind DMTDA und DETDA die einzigen Amine in der Aminkomponente.

Gegenstand der Erfindung ist auch eine Harzmasse hergestellt durch das Vermischen der Isocyanatkomponente (A) und der Aminkomponente (B) des erfindungsgemäßen Mehrkomponenten-Harzsystems.

Gegenstand der Erfindung ist auch die Verwendung einer Harzmasse hergestellt aus einem erfindungsgemäßen Mehrkomponenten-Harzsystem als Klebstoff, insbesondere als Klebstoff zur Befestigung von Konstruktionselementen an einem Bauwerk oder an einem Teil eines Bauwerks.

Gegenstand der Erfindung ist auch die Verwendung einer Harzmasse hergestellt aus einem erfindungsgemäßen Mehrkomponenten-Harzsystem zur chemischen Befestigung von Konstruktionselementen in Vertiefungen, insbesondere in (Bohrlöchern oder Spalten.

Die Verwendung erfolgt typischerweise bei einer Umgebungstemperatur von etwa -30°C bis etwa 40°C, bevorzugt von etwa -20°C bis etwa 23°C, stärker bevorzugt von etwa -15°C bis etwa 0°C, noch bevorzugter von etwa -10°C bis etwa -5°C. Außerdem erfolgt die Verwendung typischerweise auf bzw. in einem in Bauwerken vorkommenden Untergrund wie Stahl, Beton, Holz oder Ziegel, bevorzugt in Beton oder Ziegel.

Die Erfindung beruht auf der Erkenntnis, dass der Zusatz von DETDA zu einer Härterkomponente (B), welche DMTDA enthält, einen Einsatz des Mehrkomponenten-Harzsystems (insbesondere als chemischer Dübel) bei niedrigeren Untergrundtemperaturen ermöglich, als dies ohne den Zusatz von DETDA der Fall wäre. Bei einer Untergrundtemperatur deutlich unterhalb von 23°C (beispielsweise bei -5°C oder -10°C) kann eine höhere Verbundspannung erzielt werden, als dies mit einem Vergleichs-Mehrkomponenten-Harzsystem, in welchem das DETDA fehlt (welches beispielsweise nur DMTDA als Härter umfasst), der Fall ist. Dadurch wird es möglich, auch bei diesen niedrigen Untergrundtemperaturen eine Verbundspannung bzw. Auszugskraft von mindestens 80%, bevorzugt sogar mindestens 90% der Verbundspannung bzw. Auszugskraft zu erzielen, welche bei einer Untergrundtemperatur von 23°C erzielt werden. Gegenstand der Erfindung ist daher auch die Verwendung von DETDA zur Herabsetzung der Untergrundtemperatur, bei der noch 80%, bevorzugt noch 90% der Verbundspannung bei einer Untergrundtemperatur von 23°C erzielt werden, indem in einem Mehrkomponenten-Harzsystem umfassend:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B) umfassend ein Isomerengemisch aus 6-Methyl-2,4-bis(methylthio)phenylen-1,3-diamin und 2-Methyl-4,6-bis(methylthio)phenylen-1,3-diamin (DMTDA),
das bereits vorhandene DMTDA teilweise durch DETDA ersetzt wird.

Je höher der DETDA-Gehalt im Verhältnis zum DMTDA-Gehalt ist, desto tiefer ist typischerweise die Untergrundtemperatur, bei der noch akzeptable Verbundspannungen bzw. Auszugskraft-Werte erzielt werden. So können in einer Ausführungsform der Erfindung bei einer Untergrundtemperatur, welche unterhalb von 23°C liegt, bevorzugt mindestens 80%, sogar mindestens 90% der Verbundspannung bzw. Auszugskraft bei einer Untergrundtemperatur von 23°C erzielt werden.

Außerdem lässt sich durch die Variation des Verhältnisses von DETDA zu DMTDA die Verarbeitungszeit einstellen. Je mehr DETDA enthalten ist, desto kürzer wird typischerweise die Verarbeitungszeit. In einer Ausführungsform der Erfindung lässt sich die Verarbeitungszeit damit genau einstellen, typischerweise auf etwa ±10 Sekunden pro Minute Gesamtverarbeitungszeit, bevorzugt auf etwa ±5 Sekunden pro Minute Gesamtverarbeitungszeit, bevorzugter sogar auf etwa ±5 Sekunden pro Minute Gesamtverarbeitungszeit.

Die vorliegende Erfindung verwendet deswegen in der Härterkomponente (B) eine Mischung aus DMTDA und DETDA.

Im Sinne der Erfindung haben die hier und in der nachfolgenden Beschreibung verwendeten Begriffe die folgende Bedeutung:
- *"Mehrkomponenten-Harzsystem"* bezeichnet ein Harzsystem, das mehrere voneinander getrennt gelagerte Komponenten umfasst, wobei das Harzsystem mindestens eine Harzkomponente (A) und mindestens eine Härterkomponente (B) umfasst, so dass eine Härtung erst nach dem Mischen aller Komponenten erfolgt. In einer bevorzugten Ausführungsform ist ein Mehrkomponenten-Harzsystem ein Zwei-Komponenten-Harzsystem.
- *"Harzmasse"* bezeichnet eine reaktionsfähige Masse umfassend einen härtbaren Inhaltsstoff (im Rahmen der vorliegenden Erfindung: ein Polyisocyanat) und einen geeigneten Härter für den härtbaren Inhaltsstoff. Erfindungsgemäß wird diese Harzmasse typischerweise durch Mischen der Harzkomponente (A) (erfindungsgemäß ist dies die Isocyanatkomponente) und der Härterkomponente (B) erhalten und anschließend zur als chemischer Dübel oder als Klebstoff verwendet.
- "*Isocyanate*" sind Verbindungen, die eine funktionelle Isocyanatgruppe -N=C=O aufweisen und durch die Struktureinheit R-N=C=O charakterisiert werden.
- "*Polyisocyanate*" sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert und haben damit eine NCO-Funktionalität von 2.
- "*Amine*" sind Verbindungen mit einer funktionellen NH-Gruppe, die durch Austausch von einem oder zwei Wasserstoffatomen durch Kohlenwasserstoffgruppen aus Ammoniak abgeleitet sind und die allgemeinen Strukturen RNH₂ (primäre Amine) und R₂NH (sekundäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)).
- "*mittlere NCO-Funktionalität"* beschreibt die gemittelte Anzahl an reaktiven IsocyanatGruppen pro Mol eines Polyisocyanats oder einer Mischung aus mehreren Polyisocyanaten. Sie wird für eine Mischung nach der Formel: mittlere NCO-Funktionalität (Mischung) = Σ NCO-Funktionalität (Polyisocyanat i) / ni, also der Summe der NCO-Funktionalität der Einzelpolyisocyanate i geteilt durch die Anzahl der Einzelpolyisocyanate i, ermittelt.
- "*NH-Funktionalität*" beschreibt die Anzahl aktiver Wasserstoffatome, die mit einer Isocyanatgruppe reagieren können, in einer Aminogruppe.
- *"mittlere NH-Funktionalität"* beschreibt die Anzahl der an ein Stickstoffatom gebundenen Wasserstoffatome in einem Amin an. Demnach weist bspw. ein primäres Monoamin eine mittlere NH-Funktionalität von 2, ein primäres Diamin eine mittlere NH-Funktionalität von 4, ein Amin mit 3 sekundären Aminogruppen eine mittlere NH-Funktionalität von 3 auf und ein Diamin mit einer primären und einer sekundären Aminogruppe eine mittlere NH-Funktionalität von 3 auf. Die mittlere NH-Funktionalität kann sich auch nach den Angaben der Anbieter von Aminen richtet, wobei die tatsächlich angegebene NH-Funktionalität von der theoretischen mittleren NH-Funktionalität, wie sie hierin verstanden wird, abweichen kann. Durch den Ausdruck "mittlere" wird ausgedrückt, dass es sich um die NH-Funktionalität der Verbindung und nicht die NH-Funktionalität der in den Verbindungen enthaltenen Aminogruppe(n) handelt. Die Aminogruppen können dabei primäre oder sekundäre Aminogruppen sein. Die mittlere NH-Funktionalität wird für eine Mischung nach der Formel: mittlere NH-Funktionalität (Mischung) = Σ NH-Funktionalität (Amin j) / nj, also der Summe der NH-Funktionalität der Einzelamine j geteilt durch die Anzahl der Einzelamine j, ermittelt.
- "*Isocyanatkomponente (A)*" bzw. *"Komponente (A)"* beschreibt eine Komponente des Mehrkomponenten-Harzsystems, welche mindestens ein Polyisocyanat und ggf. mindestens einen Füllstoff und/oder mindestens ein Rheologieadditiv und/oder weitere Additive umfasst.
- "*Aminkomponente (B)*" bzw. *"Komponente (B)"* beschreibt eine Komponente des Mehrkomponenten-Harzsystems, welche mindestens ein gegenüber Isocyanatgruppen reaktives Amin (im Kontext der vorliegenden Erfindung: mindestens DMTDA und DETDA) und ggf. mindestens einen Füllstoff und/oder mindestens ein Rheologieadditiv und/oder weitere Additive umfasst.
- "*aliphatische Verbindungen*" sind acyclische oder cyclische, gesättigte oder ungesättigte Kohlenstoffverbindungen, ausgenommen aromatische Verbindungen.
- "*cycloaliphatische Verbindungen*" sind Verbindungen mit einer carbocyclischen Ringstruktur, ausgenommen Benzolderivate oder andere aromatische Systeme.
- "*aromatische Verbindungen*" sind Verbindungen, die der Hückel (4n+2)-Regel folgen.
- *"poly", "Poly"* als Präfix bedeutet, dass zwei oder mehr der sich an dieses Präfix anschließenden Gruppen in einer Verbindung enthalten sind. Im Rahmen der vorliegenden Erfindung bedeutet dies insbesondere, dass Diisocyanate vom Begriff "*Polyisocyanate*" umfasst sind.
- *"ein", "eine", "einer"* als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können.
- *"mindestens ein"*, *"mindestens eine", "mindestens einer"zahlenmäßig "ein oder mehrere"*; in einer bevorzugten Ausführungsform ist mit diesem Begriff zahlenmäßig *"ein"*, *"eine", "einer"* gemeint.
- *"etwa"* vor einem Zahlenwert erlaubt eine Abweichung von ±10 %, in einer bevorzugten Ausführungsform ±5 %, in einer stark bevorzugten Ausführungsform ±1 % von diesem Zahlenwert, in der am stärksten bevorzugten Ausführungsform bedeutet "etwa" dass genau dieser Zahlenwert gemeint ist, also eine Abweichung von ±0 %.
- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus".*

Alle in diesem Text genannten Normen (z.B. DIN-Normen) wurden in der zum Anmeldetag der vorliegenden Anmeldung aktuellen Ausgabe verwendet. Alle Handelsnamen entsprechen den Produkten, wie sie unter diesen Handelsnamen zum Zeitpunkt des Anmeldetages der vorliegenden Anmeldung verfügbar waren.

Wie vorstehend ausgeführt ist ein Mehrkomponenten-Harzsystem gemäß der vorliegenden Erfindung ein System, das zwei oder mehrere räumlich voneinander getrennt gelagerte Komponenten umfasst. In einer bevorzugten Ausführungsform handelt es sich bei einem erfindungsgemäßen Mehrkomponenten-Harzsystem um ein Zwei-Komponenten-Harzsystem. Im Folgenden werden die Bestandteile der Komponenten (A) und (B) eines erfindungsgemäßen Mehrkomponenten-Harzsystems beispielhaft anhand eines ZweiKomponenten-Systems näher erläutert.

Erfindungsgemäße Polyisocyanat-Amin-Systeme sind Mehrkomponenten-Systeme, bei denen je eine NCO-Gruppe des in Komponente (A) enthaltenen härtbaren Polyisocyanats mit je einer Amingruppe der in Komponente (B) enthaltenen Amine reagiert. Die Isocyanatkomponente (A) und die Aminkomponente (B) werden erfindungsgemäß in einem Mengenverhältnis vermischt, bei dem das numerische Verhältnis von mittlerer NCO-Funktionalität in der Isocyanatkomponente (A) zu mittlerer NH-Funktionalität in der Aminkomponente (B) von 0,3 bis 2,0, bevorzugt von 0,7 bis 1,8, weiter bevorzugt von 1,0 bis 1,5, und am meisten bevorzugt von 1,0 bis 1,3 beträgt. In einer besonders bevorzugten Ausführungsform beträgt dieses numerische Verhältnis etwa 1,0 oder etwa 1,25.

### Polyisocyanat

Die Isocyanatkomponente (A) eines Mehrkomponenten-Harzsystems gemäß der Erfindung umfasst mindestens ein aliphatisches oder cycloaliphatisches Polyisocyanat mit einer mittleren NCO-Funktionalität von etwa 2 oder größer.

Als das mindestens eine aliphatische oder cycloaliphatische Polyisocyanat in Komponente (A) der vorliegenden Erfindung kommt eine Vielzahl der hierfür dem Fachmann bekannten und kommerziell erhältlichen Verbindungen, einzeln oder in beliebigen Mischungen untereinander, in Betracht.

Das Polyisocyanat hat bevorzugt eine mittlere NCO-Funktionalität von etwa 2 oder größer, stärker bevorzugt von etwa 2 bis etwa 10, noch stärker bevorzugt von etwa 2 bis etwa 6, am bevorzugtesten von etwa 2 bis etwa 4.

Bevorzugt werden aliphatische oder cycloaliphatische Polyisocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen. Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5-diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5-Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI), 3(4)-Isocyanatomethyl-1-methyl-cyclohexylisocyanat (IMCI), Octahydro-4,7-methano-1H-indendimethyldiisocyanat, Norbornendiisocyanat, 5-Isocyanato-1-(isocyanatomethyl)-1,3,3-trimethylcyclohexan, Ureylenbis(p-phenylenmethylene-p-phenylen)diisocyanat.

Besonders bevorzugte Polyisocyanate sind Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(isocyanatocyclohexyl)methan (H₁₂MDI) und Gemische dieser Polyisocyanate.

Die Polyisocyanate können auch Präpolymere (insbesondere Homopolymere), Biurete (insbesondere Diisocyanat-Biuret-Oligomerisationsprodukte), Isocyanurate, Iminooxadiazindione, Uretdione und/oder Allophanate sein, die auf Basis der in den vorausgehenden Absätzen genannten Isocyanatverbindungen sind und beispielsweise durch Umsetzung der in den vorausgehenden Absätzen genannten Isocyanatverbindungen mit Polyolen oder Polyaminen, einzeln oder als Gemisch, hergestellt wurden. Die Polyisocyanate können auch Mischungen dieser Verbindungen sein. Insbesondere können die Polyisocyanate Präpolymere oder Biurete oder Mischungen daraus sein. Die geforderte mittlere NCO-Funktionalität von 2 oder größer besteht auch bei erfindungsgemäß geeigneten Präpolymeren, Biureten, Isocyanuraten, Iminooxadiazindionen, Uretdionen und Allophanaten und deren Mischungen. Bevorzugt liegt die mittlere NCO-Funktionalität hier bei 2,5 bis 5,5, bevorzugter bei 2,7 bis 4 und besonders bevorzugt bei 2,9 bis 3,6.

Besonders bevorzugt ist das mindestens eine Polyisocyanat ein Polyisocyanat auf Basis eines Diisocyanats, insbesondere eines Diisocyanats ausgewählt aus der Gruppe bestehend aus Hexamethylendiisocyanat (HDI), Pentandiisocyanat (PDI), Isophorondiisocyanat (IPDI) und Mischungen aus zwei oder mehr davon. Ganz besonders bevorzugt ist das mindestens eine Polyisocyanat HDI oder ein Präpolymer (insbesondere ein Homopolymer) oder Biuret-Oligomerisationsprodukt davon, oder eine Mischung daraus. Bevorzugt liegt die mittlere NCO-Funktionalität hier bei 2,5 bis 5,5, bevorzugter bei 2,7 bis 4 und besonders bevorzugt bei 2,9 bis 3,6. Als bevorzugte Beispiele hierfür seien die in den Beispielen genannten Polyisocyanate genannt.

Beispiele für geeignete, kommerziell erhältliche Polyisocyanate sind Desmodur^{®} N 3900, Desmodur^{®} N 100, Desmodur^{®} N 3200, Desmodur^{®} N 3300, Desmodur^{®} ultra N 3300, Desmodur^{®} N3400, Desmodur^{®} N3500, Desmodur^{®} N 3600, Desmodur^{®} ultra N 3600, Desmodur^{®} N 3700, Desmodur^{®} N 3800, Desmodur^{®} eco N 7300, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 2863 XP, Desmodur^{®} E 3370, Desmodur^{®} XP 2599, Desmodur^{®} XP 2617, Desmodur^{®} XP 2406, Desmodur^{®} XP 2838, Desmodur^{®} XP 2840, Desmodur^{®} NZ 300, Desmodur^{®} E 30600, Bayhydur XP 2547, Bayhydur XP 2451/1, Bayhydur Ultra 307, Desmodur^{®} H (jeweils erhältlich von Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (erhältlich von Vencorex), Basonat HB 100, Basonat HI 100 NG, Basonat HI 2000 NG, Basonat HI 100 (erhältlich von BASF), Takenate 500, Takenate 600, Stabio D-376N (erhältlich von Mitsui), Duranate 24A-100, Duranate TPA-100 (erhältlich von Asahi Kasai), Coronate HXR, Coronate HXLV, Coronate HX, Coronate HK (erhältlich von Tosoh). Von diesen kommerziell erhältlichen Polyisocyanaten sind solche auf HDI-Basis (wie die in den Beispielen verwendeten Polyisocyanate) bevorzugt.

Das mindestens eine Polyisocyanat ist vorzugsweise in einem Anteil von etwa 5 bis etwa 60 Gew.-%, bevorzugt in einem Anteil von etwa 10 bis etwa 50 Gew.-%, bevorzugter in einem Anteil von etwa 15 bis etwa 35 Gew.-%, und noch bevorzugter in einem Anteil von etwa 20 bis etwa 30 Gew.-% bezogen auf das Gesamtgewicht der durch Mischung der Komponenten (A) und (B) erhaltenen Harzmasse enthalten.

In der Komponente (A) ist das mindestens eine Polyisocyanat vorzugsweise in einem Anteil von etwa 10 bis etwa 100 Gew.-%, bevorzugt von etwa 25 bis etwa 60 Gew.-%, bevorzugter von etwa 30 bis etwa 50 Gew.-% enthalten.

Das mindestens eine Polyisocyanat ist in einer besonders bevorzugten Ausführungsform das bzw. die in den Beispielen genannte(n) Polyisocyanat(e), und zwar bevorzugt in den dort genannten Gewichtsanteilen.

### Amine in der Aminkomponente (B)

Die Aminkomponente (B), welche im Mehrkomponenten-Harzsystem reaktionsinhibierend getrennt von der Isocyanatkomponente (A) vorliegt, umfasst als Amine:
- Diethyltoluoldiamin (DETDA) und
- ein Isomerengemisch aus 6-Methyl-2,4-bis(methylthio)phenylen-1,3-diamin und 2-Methyl-4,6-bis(methylthio)phenylen-1,3-diamin (DMTDA),

Das DMTDA und das DETDA liegen in einem Mengenverhältnis (DMTDA:DETDA) von etwa 17:1 bis etwa 1:1 (w/w) vor. Bevorzugt beträgt das Mengenverhältnis (DMTDA:DETDA) von etwa 15:1 bis etwa 1.1 (w/w), bevorzugter von etwa 12:1 bis etwa 1,5:1 (w/w), bevorzugter von etwa 10:1 bis etwa 1,5:1 (w/w), noch bevorzugter von etwa 6:1 bis etwa 1,5:1 (w/w). Bevorzugt sind DMTDA und DETDA die einzigen aromatischen Amine in der Aminkomponente. Bevorzugter sind DMTDA und DETDA die einzigen Amine in der Aminkomponente.

Jedoch kann die Aminkomponente neben dem DMTDA und dem DETDA auch mindestens ein weiteres gegenüber Isocyanatgruppen reaktives Amin umfassen. Bevorzugt weist dieses weitere Amin eine mittlere NH-Funktionalität von etwa 2 oder größer auf. Das weitere Amin kann entweder nur primäre oder nur sekundäre Aminogruppen, oder sowohl primäre als auch sekundäre Aminogruppen enthalten. Weitere gegenüber Isocyanatgruppen reaktive Amine neben den erfindungsgemäß obligatorischen Aminen DETDA und DMTDA sind dem Fachmann grundsätzlich bekannt.

Sollte ein weiteres gegenüber Isocyanatgruppen reaktives Amin neben dem DETDA und DMTDA in der Aminkomponente (B) enthalten sein, so beträgt sein Anteil an der Gesamtmenge der Amine in der Komponente (B) maximal etwa 80 Gew.-%, bevorzugt maximal etwa 50 Gew.-%, bevorzugter maximal etwa 20 Gew.-%, noch bevorzugter maximal etwa 5 Gew.-% der Gesamtmenge der Amine.

Die Gesamtmenge an Aminen (einschließlich DMTDA und DETDA) in der der durch Mischung der Komponenten (A) und (B) erhaltenen Harzmasse beträgt vorzugsweise von etwa 3 bis etwa 30 Gew.-%, bevorzugter von etwa 5 bis etwa 25 Gew.-%, und noch bevorzugter von etwa 10 bis etwa 20 Gew.-% bezogen auf das Gesamtgewicht der durch Mischung der Komponenten (A) und (B) erhaltenen Harzmasse.

Die Gesamtmenge an Aminen (einschließlich DMTDA und DETDA) in der Aminkomponente (B) beträgt vorzugsweise von 20 bis 100 Gew.-%, bevorzugt von 30 bis 70 Gew.-%, noch bevorzugter von 35 bis 70 Gew.-%, und noch bevorzugter von 40 bis 60 Gew.-% bezogen auf das Gesamtgewicht der Aminkomponente (B).

### Mischungsverhältnis Isocyanatkomponente (A) zu Aminkomponente (B)

Die Mengenverhältnisse der Isocyanatkomponente (A) und der Aminkomponente (B) des Mehrkomponenten-Harzsystems werden bevorzugt so gewählt, dass das numerische Verhältnis von mittlerer NCO-Funktionalität in der Isocyanatkomponente (A) zu mittlerer NH-Funktionalität in der Aminkomponente (B) von 0,3 bis 2,0, bevorzugt von 0,7 bis 1,8, weiter bevorzugt von 1,0 bis 1,5, und am meisten bevorzugt von 1,0 bis 1,3 beträgt. In einer besonders bevorzugten Ausführungsform beträgt dieses numerische Verhältnis etwa 1,0 oder etwa 1,25.

Durch Variation dieses Mengenverhältnisses kann beispielsweise die Aushärtedauer beeinflusst werden.

### Weitere Bestandteile der Komponenten (A) und (B)

Sowohl die Isocyanatkomponente (A) als auch die Härterkomponente (B) als auch beide Komponenten (A) und (B) umfassen typischerweise neben dem Isocyanat bzw. dem DMTDA und DETDA mindestens einen weiteren Bestandteil. Weitere übliche Bestandteile sind insbesondere Füllstoffe, Rheologieadditive und Verdicker (Thixotropiermittel).

Je nach weiterem Bestandteil kann es bevorzugt sein, dass der mindestens eine weitere Bestandteil nur in der Komponente (A), nur in der Komponente (B), oder in beiden Komponenten enthalten ist.

### Füllstoffe

Sowohl die Isocyanatkomponente (A) als auch die Härterkomponente (B) kann mindestens einen Füllstoff enthalten. Es ist bevorzugt, dass beide Komponenten, also sowohl die Isocyanatkomponente (A) als auch die Härterkomponente (B) jeweils mindestens einen Füllstoff enthalten.

Als Füllstoffe dienen bevorzugt anorganische Füllstoffe, insbesondere Quarz, Aluminiumoxide, Aluminiumsilikate (wie Zeolithe), Glas, Korund, Porzellan, Steingut, Schwerspat, Leichtspat, Gips, Talkum, Zemente (wie Portlandzement oder Aluminatzement), und/oder Kreide sowie deren Mischungen.

Die Füllstoffe können in Form von Partikeln (beispielsweise in Form von Pulvern, Sanden, oder Mehlen) oder Formkörpern (letzteres vorzugsweise in Form von Fasern oder Kugeln), zugesetzt werden. Durch eine geeignete Auswahl der Füllstoffe hinsichtlich Art und Partikelgrößenverteilung, Partikelgröße oder (Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweise käuflich unter der Produktserie Silbond der Firma Quarzwerke erhältlich. Hierbei sind die Produktserien Silbond EST (Epoxysilan-modifiziert) und Silbond AST 25 (aminosilan-behandelt) besonders bevorzugt. Ferner können Aluminiumoxid-basierte Füllstoffe wie beispielsweise Aluminiumoxidfeinstfüller vom Typ ASFP der Firma Denka, Japan, (d₅₀ = 0,3 µm) oder Qualitäten wie DAW oder DAM mit den Typenbezeichnungen 45 (d₅₀ < 0,44 µm), 07 (d₅₀ > 8,4 µm), 05 (d₅₀ < 5,5 µm), 03 (d₅₀ < 4,1 µm) eingesetzt werden. Weiterhin können die oberflächenbehandelten Fein- und Feinstfüllstoffe vom Typ Aktisil AM 30 (aminosilan-behandelt, dso = 2,2 µm) und Aktisil EM (epoxysilan-behandelt, dso=2,2 µm) von Hoffman Mineral verwendet werden. Auch Zeolithe können als Füllstoffe verwendet werden.

Die Füllstoffe können einzeln oder auch in beliebiger Mischung untereinander verwendet werden.

Besonders bevorzugt sind die in den Beispielen verwendeten Füllstoffe und Füllstoffmischungen, insbesondere in den dort beschriebenen Mengen und Mengenverhältnissen.

Der Gesamtfüllgrad einer Harzmasse aus den Komponenten (A) und (B) liegt, wenn mindestens ein Füllstoff vorhanden ist, in einem Bereich von >0 bis etwa 80 Gew.-%, bevorzugt in einem Bereich von etwa 10 bis etwa 70 Gew.%, noch bevorzugter in einem Bereich von etwa 20 bis etwa 60 Gew.-%, noch bevorzugter in einem Bereich von etwa 40 bis etwa 55 Gew.-%. Der Gesamtfüllgrad bezieht sich auf den gewichtsprozentualen Anteil an Füllstoff bezogen auf das Gesamtgewicht aus Komponente (A) und Komponente (B) in der Harzmasse.

Der Anteil der Füllstoffe in der Isocyanatkomponente (A), wenn ein Füllstoff darin vorhanden ist, liegt vorzugsweise bei etwa 20 bis etwa 80 Gew.-%, bevorzugt bei etwa 40 bis etwa 70 Gew.-%, noch bevorzugter bei etwa 50 bis etwa 65 Gew.-% bezogen auf das Gesamtgewicht der Harzkomponente (A). Der Anteil der Füllstoffe in der Härterkomponente (B), wenn ein Füllstoff darin vorhanden ist, liegt vorzugsweise bei etwa 10 bis etwa 70 Gew.-%, bevorzugt bei etwa 20 bis etwa 60 Gew.-%, bevorzugter bei etwa 40 bis etwa 55 Gew.-% bezogen auf das Gesamtgewicht der Härterkomponente (B).

### Verdicker und weitere optionale Bestandteile

In einer Ausführungsform kann/können die Isocyanatkomponente (A), die Härterkomponente (B) oder beide Komponenten mindestens einen Verdicker enthalten.

Geeignete Verdicker sind gegebenenfalls organisch nachbehandelte pyrogene Kieselsäure, Bentonite, Alkyl- und Methylcellulosen und Rhizinusölderivate, oder Gemische von zwei oder mehreren davon. Besonders bevorzugt ist organisch nachbehandelte pyrogene Kieselsäure. In einer bevorzugten Ausführungsform umfasst die Komponente (A) und/oder Komponente (B) eines erfindungsgemäßen Mehrkomponenten-Harzsystems Quarzmehl und/oder -sand und Kieselsäure.

Ferner können Haftvermittler zur Verbesserung der Vernetzung eines Untergrunds (beispielsweise einer (Bohr)lochwand) mit einer aus einem Mehrkomponenten-Harzsystem hergestellten Epoxidharzmasse eingesetzt werden. Geeignete Haftvermittler sind Silane, die mindestens eine Si-gebundene hydrolysierbare Gruppe aufweisen.

Bevorzugte Beispiele für Haftvermittler sind 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyl-trimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan und Trimethoxysilylpropyldiethylentetramin sowie deren Mischungen. Weitere Silane sind beispielsweise in der EP 3 000 792 A1 beschrieben.

Weitere optionale Bestandteile sind Rheologieadditive zur Einstellung der Fließeigenschaften. Geeignete Rheologieadditive sind: Schichtsilikate wie Laponite, Bentonite oder Montmorillonit, Neuburger Kieselerde, pyrogene Kieselsäure, Polysaccharide, Polyacrylat-, Polyurethan- oder Polyharnstoffverdicker sowie Celluloseester.

Zur Optimierung können weiterhin Netz- und Dispergiermittel, Phlegmatisiermittel, Oberflächenadditive, Weichmacher wie Phthalsäure- oder Sebacinsäureester, Wachsadditive, Stabilisatoren, Antistatikmittel, Flexibilisatoren, Härtungskatalysatoren, weitere Steuerungsmittel für die Reaktionsgeschwindigkeit, Entschäumer & Entlüfter, Viskositätsreduzierer oder sonstige Prozessadditive zugesetzt werden.

Ebenso denkbar sind färbende Zusätze wie Farbstoffe oder Pigmente, beispielsweise zum unterschiedlichen Anfärben der Komponenten zur besseren Kontrolle von deren Durchmischung.

### Verwendung

Das erfindungsgemäße Mehrkomponenten-Harzsystem eignet sich insbesondere als chemischer Dübel zur chemischen Befestigung von Bauteilen wie Ankergewindestangen, Bewehrungseisen, Gewindehülsen und Schrauben in Vertiefungen, insbesondere (Bohr)löchern und Spalten, die in einen für Bauwerke typischen Untergrund eingebracht sind. Daneben eignet sich das erfindungsgemäße Mehrkomponenten-Harzsystem auch als Klebstoff.

Bei der Verwendung werden die Harzkomponente (A) und die Härterkomponente (B) in einer geeigneten Vorrichtung, beispielsweise einem Statikmischer oder einem Dissolver, gemischt, woraus eine Harzmasse resultiert.

Bei der Verwendung als "chemischer Dübel" zur chemischen Befestigung erfolgt die Mischung direkt vor oder in einem Loch (bevorzugt einem Bohrloch) oder Spalt und die resultierende Harzmasse wird danach mittels einer bekannten Injektionsvorrichtung in das (ggf. zuvor gereinigte) Loch bzw. den Spalt eingebracht. Anschließend wird das zu fixierende Bauteil in die Harzmasse, welche hier bevorzugt eine Mörtelmasse ist, eingesetzt und justiert. Anschließend härtet die Masse aus.

Bei der Verwendung als Klebstoff wird die Harzmasse auf geeignete Art und Weise (Statikmischer, händisches Verrühren) gemischt und anschließend auf die zu verklebenden Teile aufgetragen.

Die Amine der Härterkomponente (B) reagieren mit den Isocyanatgruppen der Harzkomponente (A), so dass die Harzmasse unter Umgebungsbedingungen, etwa an der Baustelle, innerhalb einer gewünschten Zeit aushärtet. Diese chemische Reaktion ist von der Temperatur, der Feuchtigkeit in Umgebung und Untergrund, der chemischen Zusammensetzung des Untergrunds, sowie von den eingesetzten Bestandteilen der Komponenten (A) und (B) abhängig. Umgebungsbedingungen können variieren, wie z.B. niedrige Temperaturen (z.B. - 5°C) während der Nacht.

Ein erfindungsgemäßes Mehrkomponenten-Harzsystem wird bevorzugt für Bauzwecke eingesetzt. Der Begriff "für Bauzwecke" bedeutet das Baukleben sowie die Verwendung des Mehrkomponenten-Harzsystems als chemischer Dübel.

Der Einsatz erfolgt insbesondere auf bzw. in Ziegel, Beton, Gestein oder anderen mineralischen Untergründen, Stahl oder Holz, bevorzugt in Ziegel oder Beton.

Die Verwendung als Klebstoff (beim Baukleben) erfolgt insbesondere zum Verkleben und für die strukturelle Verstärkung von Bauteilen aus Holz, Mauerwerk und anderen mineralischen Materialien, für die Armierung von Bauobjekten mit faserverstärkten Polymeren, für die chemische Befestigung auf Oberflächen aus Ziegel, Beton, Gestein, Holz, Stahl oder anderen mineralischen Materialien, bevorzugt aus Ziegel oder Beton.

Die Verwendung als chemischer Dübel erfolgt insbesondere für die chemische Befestigung von Konstruktionselementen und Verankerungsmitteln, wie Anker(gewinde)stangen, Ankerbolzen, (Gewinde)stangen, (Gewinde)hülsen, Verstärkungseisen, Schrauben und dergleichen, in (Bohr)löchern oder Spalten in verschiedenen Untergründen, wie Mauerwerk, Beton, Ziegel, anderen mineralischen Materialien, Metallen (z.B. Stahl), Keramiken, Kunststoffen, Glas und Holz, bevorzugt in Beton oder Ziegel.

Ganz besonders bevorzugt dient ein erfindungsgemäßes Mehrkomponenten-Harzsystem zur chemischen Befestigung von Verankerungselementen in einem Loch (insbesondere einem Bohrloch) oder Spalt in einem Bausubstrat.

Die Verwendung erfolgt typischerweise bei einer Untergrundtemperatur von etwa -20°C bis etwa 30°C, bevorzugt von etwa -15°C bis etwa 10°C, bevorzugter von etwa -10°C bis etwa 0°C, noch bevorzugter von etwa -10°C bis etwa -5°C.

Für die Verwendung als chemischer Dübel im Baubereich, insbesondere bei großen Bauteilen, hängt die Untergrundtemperatur typischerweise von der Umgebungstemperatur ab.

Außerdem erfolgt die Verwendung als chemischer Dübel typischerweise auf einem in Bauwerken vorkommenden Untergrund wie Stahl, Beton, Holz, Gestein oder Ziegel. Bevorzugt ist der Untergrund Beton, beispielsweise der in den Beispielen verwendete Beton.

Eine weitere erfindungsgemäße Verwendung ist die Verwendung von DETDA zur Herabsetzung der Untergrundtemperatur, bei der mit einem Mehrkomponenten-Harzsystem noch 80%, bevorzugt noch 90% der Verbundspannung bzw. Auszugskraft bei einer Untergrundtemperatur von 23°C erzielt werden. Besagtes Mehrkomponenten-Harzsystem umfasst:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B) umfassend ein Isomerengemisch aus 6-Methyl-2,4-bis(methylthio)phenylen-1,3-diamin und 2-Methyl-4,6-bis(methylthio)phenylen-1,3-diamin (DMTDA).

In diesem Mehrkomponenten Harzsystem wird das DMTDA teilweise durch das DETDA ersetzt. "Teilweise" bedeutet hier, dass so viel DMTDA durch DETDA ersetzt wird, dass ein wie oben beschriebenes Verhältnis DMTDA:DETDA erzielt wird.

Je höher der DETDA-Gehalt im Verhältnis zum DMTDA-Gehalt ist, desto tiefer ist typischerweise die Untergrundtemperatur, bei der noch 80% oder noch 90% der Verbundspannung bzw. Auszugskraft bei einer Untergrundtemperatur von 23°C erzielt werden.

Eine weitere erfindungsgemäße Verwendung ist die Verwendung von DETDA zur Senkung der Verarbeitungszeit und/oder Aushärtedauer eines Mehrkomponenten-Harzsystems. Besagtes Mehrkomponenten-Harzsystem umfasst:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B) umfassend ein Isomerengemisch aus 6-Methyl-2,4-bis(methylthio)phenylen-1,3-diamin und 2-Methyl-4,6-bis(methylthio)phenylen-1,3-diamin (DMTDA).

In diesem Mehrkomponenten Harzsystem wird das DMTDA teilweise durch das DETDA ersetzt. "Teilweise" bedeutet hier, dass so viel DMTDA durch DETDA ersetzt wird, dass ein wie oben beschriebenes Verhältnis DMTDA: DETDA erzielt wird. So kann die Verarbeitungszeit und/oder Aushärtedauer gezielt eingestellt werden.

Je mehr DETDA im Verhältnis zu DMTDA enthalten ist, desto kürzer wird typischerweise die Verarbeitungszeit. In einer Ausführungsform der Erfindung lässt sich die Verarbeitungszeit damit genau einstellen, typischerweise auf etwa ±10 Sekunden pro Minute Gesamtverarbeitungszeit, bevorzugt auf etwa ±5 Sekunden pro Minute Gesamtverarbeitungszeit, bevorzugter sogar auf etwa ±5 Sekunden pro Minute Gesamtverarbeitungszeit.

Je mehr DETDA im Verhältnis zu DMTDA enthalten ist, desto kürzer wird typischerweise die auch die Aushärtedauer.

### Bevorzugte Ausführungsformen

### Komponente (A):

In einer bevorzugten Ausführungsform umfasst die Komponente (A) eines erfindungsgemäßen Mehrkomponenten-Harzsystems HMDI oder ein Präpolymer oder Biuret davon, mindestens einen Füllstoff, mindestens einen Verdicker, und mindestens ein Rheologieadditiv.

In einer bevorzugteren Ausführungsform umfasst die Komponente (A) eines erfindungsgemäßen Mehrkomponenten-Harzsystems HMDI Homopolymer und bevorzugt zusätzlich HMDI-Biuret, Quarzmehl und/oder Quarzsand, Zeolith, Kieselsäure und ein Silan.

In einer besonders bevorzugten Ausführungsform umfasst die Komponente (A) eines erfindungsgemäßen Mehrkomponenten-Harzsystems von etwa 20 bis etwa 25 Gew.-% HMDI Homopolymer und von etwa 3 bis etwa 5 Gew.-% HMDI-Biuret, von etwa 30 Gew.-% bis etwa 50 Gew.-% Quarzmehl und/oder Quarzsand, von etwa 1,5 bis etwa 2,5 Gew.-% Zeolith, von etwa 0,5 bis etwa 1,5 Gew.% Kieselsäure, und von etwa 1 bis etwa 2,5 Gew.-% Silan, wobei alle Gew.-% auf das Gesamtgewicht der durch Mischung der Komponenten (A) und (B) erhaltenen Harzmasse bezogen sind.

Besonders bevorzugt umfasst die Komponente (A) die Isocyanatkombination wie in den Beispielen beschrieben, und zusätzlich bevorzugt mindestens einen Füllstoff.

Am bevorzugtesten ist die Komponente (A) eine der in den Beispielen beschriebenen Komponenten (A).

### Komponente (B):

In einer bevorzugten Ausführungsform umfasst die Komponente (B) eines erfindungsgemäßen Mehrkomponenten-Harzsystems DMTDA und DETDA als einzige Amine, mindestens einen Füllstoff und Kieselsäure.

Das DMTDA und das DETDA liegen in dieser bevorzugten Ausführungsform in einem Mengenverhältnis (DMTDA:DETDA) von etwa 10:1 bis etwa 1,5:1 (w/w), bevorzugter von etwa 6:1 bis etwa 1,5:1 (w/w) vor.

In einer stark bevorzugten Ausführungsform umfasst die Komponente (B) eines erfindungsgemäßen Mehrkomponenten-Harzsystems von etwa 5 bis etwa 25 Gew.-%, bevorzugter von etwa 10 bis etwa 20 Gew.-%, DMTDA plus DETDA, von etwa 8 bis etwa 20 Gew.-% Quarzmehl und/oder Quarzsand, und von etwa 0,2 bis etwa 0,9 Gew.-% Kieselsäure, wobei alle Gew.-% auf das Gesamtgewicht der durch Mischung der Komponenten (A) und (B) erhaltenen Harzmasse bezogen sind. Das DMTDA und das DETDA liegen in dieser Ausführungsform in einem Mengenverhältnis (DMTDA:DETDA) von etwa 10:1 bis etwa 1,5:1 (w/w), bevorzugter von etwa 6:1 bis etwa 1,5:1 (w/w) vor.

Besonders bevorzugt umfasst die Komponente (B) die DMTDA-DETDA-Kombination wie in den Beispielen beschrieben als einzige Amine, und zusätzlich bevorzugt mindestens einen Füllstoff.

Am bevorzugtesten ist die Komponente (B) eine der in den Beispielen beschriebenen Komponenten (B). Am bevorzugtesten ist die Komponente (B) eine der in den Beispielen beschriebenen Komponenten (B).

### Komponenten A+B

Ganz besonders bevorzugt als Bestandteile eines erfindungsgemäßen Mehrkomponenten-Harzsystems sind die Kombinationen aus den Polyisocyanaten mit DMTDA und DETDA (welche die einzigen Amine im Harzsystem sind), welche in den Beispielzusammensetzungen verwendet werden, insbesondere in den dort verwendeten Gewichtsanteilen und ganz besonders bevorzugt in Kombination mit den dort verwendeten anderen Bestandteilen der Komponenten (A) und (B). Am bevorzugtesten für ein erfindungsgemäßes Mehrkomponenten-Harzsystem aus Komponenten (A) und (B) sind diejenigen Zusammensetzungen der Komponenten (A) und (B), welche als Kombinationen in den Beispielen beschrieben werden.

Die Isocyanatkomponente (A) und die Aminkomponente (B) werden dabei in einem Mengenverhältnis vermischt, bei dem das numerische Verhältnis von mittlerer NCO-Funktionalität in der Isocyanatkomponente (A) zu mittlerer NH-Funktionalität in der Aminkomponente (B) von 1,0 bis 1,5, und bevorzugt von 1,0 bis 1,3 beträgt. In einer besonders bevorzugten Ausführungsform beträgt dieses numerische Verhältnis etwa 1,0 oder etwa 1,25.

In einer besonders bevorzugten Ausführungsform eines erfindungsgemäßen Mehrkomponenten-Harzsystems umfasst die Komponente (A) von etwa 20 bis etwa 25 Gew.% HMDI Homopolymer und von etwa 3 bis etwa 5 Gew.-% HMDI-Biuret, von etwa 30 Gew.-% bis etwa 50 Gew.-% Quarzmehl und/oder Quarzsand, von etwa 1,5 bis etwa 2,5 Gew.-% Zeolith, von etwa 0,5 bis etwa 1,5 Gew.% Kieselsäure, und von etwa 1 bis etwa 2,5 Gew.-% Silan, wobei alle Gew.-% auf das Gesamtgewicht der durch Mischung der Komponenten (A) und (B) erhaltenen Harzmasse bezogen sind; und die Komponente (B) von etwa 5 bis etwa 25 Gew.-%, bevorzugter von etwa 10 bis etwa 20 Gew.-%, DMTDA plus DETDA, von etwa 8 bis etwa 20 Gew.-% Quarzmehl und/oder Quarzsand, und von etwa 0,2 bis etwa 0,9 Gew.-% Kieselsäure, wobei alle Gew.-% auf das Gesamtgewicht der durch Mischung der Komponenten (A) und (B) erhaltenen Harzmasse bezogen sind. Das DMTDA und das DETDA liegen in dieser Ausführungsform in einem Mengenverhältnis (DMTDA:DETDA) von etwa 10:1 bis etwa 1,5:1 (w/w), bevorzugter von etwa 6:1 bis etwa 1,5:1 (w/w) vor. Hier werden die Isocyanatkomponente (A) und die Aminkomponente (B) in einem Mengenverhältnis vermischt, bei dem das numerische Verhältnis von mittlerer NCO-Funktionalität in der Isocyanatkomponente (A) zu mittlerer NH-Funktionalität in der Aminkomponente (B) von 1,0 bis 1,3 beträgt. Besonders bevorzugt beträgt dieses numerische Verhältnis etwa 1,0 oder etwa 1,25.

Am bevorzugtesten sind die in den Beispielen beschriebenen Kombinationen aus Komponente (A) und (B).

Die Erfindung wird im Folgenden anhand von Ausführungsbeispielen weiter beschrieben, die jedoch nicht in einem einschränkenden Sinn verstanden werden sollen.

### AUSFÜHRUNGSBEISPIELE

**Tabelle 1: Verwendete Bestandteile der Komponenten (A) und (B)**

| | | |
|---|---|---|
| Hexamethylen-1,6-diisocyanat Homopolymer | Desmodur^{®} N 3900: niedrigviskoses, aliphatisches Polyisocyanat-Herz auf Basis von Hexamethylendiisocyanat (HDI) (Äquivalentgewicht ca. 179; NCO-Gehalt nach M105-ISO 11909 23,5+-0,5 Gew.-%, monomeres HDI nach M106-ISO 10283 < 0,25 %; Viskosität (23°C) nach M014-ISO 3219/A.3 730 +-100 mPa·s) | Covestro AG |
| Hexamethylen-1,6-diisocyanat Biuret Oligomerisationsprodukt | Desmodur^{®} N 3200 | Covestro AG |
| Mischung aus 6-Methyl-2,4-bis(methylthio)phenylen-1,3-diamin und 2-Methyl-4,6-bis(methylthio)phenylen-1,3-diamin (DMTDA) | Ethacure^{®} 300 Curative (Dimethylthiotoluoldiamine 95-97 %, Monomethylthiotoluoldiamin 2- 3 %; Äquivalentgewicht mit Isocyanaten 107) | Albemarle Corporation |
| Diethyltoluoldiamin (DETDA) | Ethacure^{®} 100 Plus | Albemarle Corporation |
| 3-Glycidyloxypropyltrimethoxysilan | Dynasylan^{®} GLYMO | Evonik Resource Efficiency GmbH |
| Zeolithpulver 1 | Synthetischer Zeolith; Purmol^{®} 3ST | Zeochem AG |
| Zeolithpulver 2 | Synthetischer Zeolith; L-Powder | UOP |
| Quarzmehl | Millisil^{®} W12 | Quarzwerke Frechen |
| Quarzsand | P10 | Strobel |
| Kieselsäure | Cab-O-Sil^{®} TS-720 | Cabot |

### Beispiel 1: Versuche in Beton als Untergrund

### Herstellung der Komponenten (A) und (B):

Die verwendeten Bestandteile aller (Vergleichs)beispiele und ihre Anteile in Gew.-% bezogen auf das Gesamtgewicht aus Komponente (A) plus (B) sind unten in Tabelle 2 aufgelistet.

Sowohl die Komponente (A) als auch die Komponente (B) wurden mittels eines Dissolvers (PC Laborsystem, Volumen 1L) hergestellt. Nachdem die Füllstoffe den flüssigen Bestandteilen der jeweiligen Komponente zugesetzt wurden, die sich in einem für den Dissolver geeigneten Becherglas oder Plastikeimer befanden, wurde die Komponente zunächst von Hand mit einem Holzspatel gemischt. Der Plastikeimer oder das Becherglas wurden dann am Scheibenrührer angebracht, die Abdeckung wurde geschlossen und ein Vakuum von 80 mbar erzeugt, um das Einbringen von Lufteinschlüsse in die Masse zu vermeiden. Der Rührvorgang lief acht Minuten bei 2.500 U / min.

Die so hergestellten Massen wurden dann luftblasenfrei in 2:1 bzw. 3:1 2-Komponenten-Hartkartuschen (2K-Kartuschen) mit Statikmischer gefüllt.

### Bestimmung von Verbundspannung und Aushärtedauer:

Zur Bestimmung der mit den aus den Komponenten (A) und (B) hergestellten Mörtelmassen erzielten Verbundspannungen wurde eine hochfeste Ankergewindestange M12 verwendet, die in ein hammergebohrtes Bohrloch mit einem Durchmesser von 14 mm und einer Bohrlochtiefe von 60 mm mit der jeweiligen Mörtelmasse in C20/25 Betonplatten eingedübelt wurde. Zum Eindübeln wurde das Bohrloch vom Bohrlochgrund her mit der jeweiligen zu prüfenden Mörtelmasse aus der 2K-Kartusche mit Statikmischer zu zwei Dritteln befüllt.

Zur Bestimmung der Referenzverbundspannung wurde nach einer Aushärtezeit von 24 h bei einer Temperatur von 23°C die Verbundspannung durch zentrisches Ausziehen der Ankergewindestange mit enger Abstützung (also Abstützung nahe am Bohrloch) ermittelt. Die Verbundspannung bei -5 und -10 °C wurde nach einer Aushärtezeit von 144 h bei -5°C bzw. -10°C ermittelt.

Anhand der Verbundspannungswerte abhängig von der Zeit wurde die Aushärtedauer bestimmt. Die Ankergewindestangen wurden dazu nach einer, zwei, vier, sechs und vierundzwanzig Stunden gezogen.

### Bestimmung der Verarbeitungszeit:

Eine hochfeste Ankergewindestange M10 wurde verwendet, um die Verarbeitungszeiten zu bestimmen. Zum Eindübeln wurde ein hammergebohrtes Bohrloch mit einem Durchmesser von 12 mm und einer Bohrlochtiefe von 90 mm (+/- 3 mm) vom Bohrlochgrund her mit der jeweiligen zu prüfenden Mörtelmasse aus der 2K-Kartusche mit Statikmischer zu zwei Dritteln befüllt. Die Ankergewindestange wurde bei einer Temperatur von 23°C stufenweise (in Schritten von 5 mm alle 30 Sekunden) in das befüllte Bohrloch geschoben. Die Zeit wurde aufgezeichnet, bis die Polymerisation so weit fortgeschritten war, dass die Ankergewindestange nicht mehr weiter in das Bohrloch geschoben werden konnte.

**Tabelle 2: Zusammensetzung der Beispiele und Vergleichsbeispiele sowie Testergebnisse in Beton (Zusammensetzung in Gew.% bezogen auf die verwendete Mischung aus (A) und (B); wo die Summe dieser Gew.% nicht exakt 100% ergibt, ist dies Rundungsfehlern geschuldet)**

| **Bestandteile** | **V1** | **B1** | **B2** | **B3** | **B4** |
|---|---|---|---|---|---|
| **Komponente (A)** | | | | | |
| Hexamethylen-1,6-diisocyanat Homopolymer (N3900) | 23,6 | 24,3 | 21,8 | 24,3 | 21,7 |
| Hexamethylen-1,6-diisocyanat Biuret Oligomerisationsprodukt (N3200) | 3,9 | 4,1 | 3,5 | 4,1 | 3,5 |
| 3-Glycidyloxypropyltrimethoxysilan | 2,0 | 2,0 | 1,7 | 2,0 | 1,7 |
| Quarzmehl (W12) | 33,1 | 34,1 | 15,6 | 34,1 | 15,5 |
| Quarzsand | - | - | 32,0 | | 31,8 |
| Kieselsäure | 1,0 | 1,0 | 0,9 | 1,0 | 0,9 |
| Zeolithpulver 1 | - | 2,0 | | 2,0 | |
| Zeolithpulver 2 | 2,0 | - | 2,3 | | 2,3 |

| **Komponente (B)** | | | | | |
|---|---|---|---|---|---|
| (6-Methyl-2,4-bis(methylthio)phenylen-1,3-diamin / 2-Methyl-4,6-bis(methylthio)-phenylen-1,3-diamin (DMTDA) | 17,1 | 9,8 | 8,3 | 13,6 | 11,0 |
| Diethyltoluoldiamin (DETDA) | - | 6,5 | 3,6 | 3,4 | 1,1 |
| Quarzmehl | 16,9 | 15,8 | 2,3 | 15,1 | 2,3 |
| Quarzsand | - | - | 7,7 | | 7,8 |
| Kieselsäure | 0,5 | 0,5 | 0,4 | 0,5 | 0,4 |
| | | | | | |
| Stöchiometrie Isocyanatgruppen: | 1:1 | 1:1 | 1,24: | 1:1 | 1,26: |
| Amingruppen (ermittelt anhand der Äquivalentgewichte) | | | 1 | | 1 |
| Verhältnis (w/w) DMTDA:DETDA | - | 1,5:1 | 2,3:1 | 4:1 | 10:1 |
| Verarbeitungszeit in min:sec | 9:30 | 1:10 | 1:30 | 2:20 | 5:00 |
| Aushärtedauer in h | 6 | n.b. | 2 | n.b. | 4 |
| Verbundspannung bei 23°C in N/mm² | 33,1 | 35,9 | 35,2 | 34,5 | 32,9 |
| Verbundspannung bei -5°C in N/mm² | 25,3 | 29,1 | n.b. | 28,7 | 28,0 |
| Verbundspannung bei -10°C in N/mm² | 23,5 | n.b. | 31,2 | n.b. | 24,9 |

| | | | | | |
|---|---|---|---|---|---|
| "n.b.": nicht bestimmt | | | | | |

Aus Tabelle 2 ist zu entnehmen, dass das Vergleichsbeispiel V1 eine deutlich längere Aushärtedauer zeigt als die Beispiele B1 bis B4. Zudem ist die Verbundspannung des Vergleichsbeispiels bei -5°C und -10°C niedriger als bei den Beispielen B1 bis B4.

Die Zugabe von DETDA zur Komponente (B) zusätzlich zu DMTDA verringert außerdem die Verarbeitungszeit und die Aushärtedauer. Je mehr DETDA in Relation zu DMTDA zugegeben wird, desto kürzer wird die Verarbeitungszeit und die Aushärtedauer.

Besonders gut sind diese Effekte am Beispiel B1 und B2 im Vergleich zu V1 zu erkennen.

### Beispiel 2: Versuch in Ziegel als Untergrund

### Herstellung der Komponenten (A) und (B):

Die verwendeten Bestandteile der Komponenten (A) und (B) und ihre Anteile in Gew.-% bezogen auf das Gesamtgewicht aus Komponente (A) plus (B) sind unten in Tabelle 3 aufgelistet.

Sowohl die Komponente (A) als auch die Komponente (B) wurden mittels eines Dissolvers (PC Laborsystem, Volumen 1L) hergestellt. Nachdem die Füllstoffe den flüssigen Bestandteilen der jeweiligen Komponente zugesetzt wurden, wurde die Komponente zunächst von Hand mit einem Holzspatel gemischt. Der Behälter wurden dann am Scheibenrührer angebracht, die Abdeckung wurde geschlossen und ein Vakuum von 80 mbar erzeugt, um das Einbringen von Lufteinschlüsse in die Masse zu vermeiden. Der Rührvorgang lief acht Minuten bei 3.500 U / min.

Die so hergestellten Massen wurden dann luftblasenfrei in eine 3:1 2-Komponenten-Hartkartusche (2K-Kartusche) mit Statikmischer gefüllt.

### Bestimmung der Auszugskraft:

Zur Bestimmung der mit der aus den Komponenten (A) und (B) hergestellten Mörtelmasse erzielten Auszugskraft wurde eine hochfeste Ankergewindestange M12 verwendet, die in ein hammergebohrtes Bohrloch mit einem Durchmesser von 14 mm und einer Bohrlochtiefe von 80 mm mit der Mörtelmasse in mechanisch vorgespannte Vollziegelsteine (Druckfestigkeit 21,8 N/mm²) der Firma Rapis eingedübelt wurde. Zum Eindübeln wurde das Bohrloch vom Bohrlochgrund her mit der Mörtelmasse aus der 2K-Kartusche mit Statikmischer zu zwei Dritteln befüllt.

Die Auszugskraft wurde bei unterschiedlichen Temperaturen bestimmt. Zur Bestimmung der Auszugskraft wurde nach einer Aushärtezeit von 24 h (für die Bestimmung bei 20°C und 40°C) bzw. nach einer Aushärtezeit von 168 Stunden (für die Bestimmung bei -5°C und 5°C) die Auszugskraft durch zentrisches Ausziehen der Ankergewindestange mit enger Abstützung (also Abstützung nahe am Bohrloch) ermittelt. Die Ergebnisse sind in Tabelle 3 aufgeführt.

**Tabelle 3: Zusammensetzung des Beispiels sowie Testergebnisse in Ziegel (Zusammensetzung in Gew.-% bezogen auf die verwendete Mischung aus (A) und (B); wenn die Summe dieser Gew.-% nicht exakt 100% ergibt, ist dies Rundungsfehlern geschuldet)**

| **Bestandteile** | **A1** |
|---|---|
| **Komponente (A)** | |
| Hexamethylen-1,6-diisocyanat | 21,7 |
| Homopolymer (N3900) | |
| Hexamethylen-1,6-diisocyanat Biuret | 3,5 |
| Oligomerisationsprodukt (N3200) | |
| 3-Glycidyloxypropyltrimethoxysilan | 1,7 |
| Quarzmehl (W12) | 15,5 |
| Quarzsand | 31,8 |
| Kieselsäure | 0,9 |
| Zeolithpulver 1 | 2,3 |

| **Komponente (B)** | |
|---|---|
| (6-Methyl-2,4-bis(methylthio)phenylen-1,3-diamin / 2-Methyl-4,6-bis(methylthio)-phenylen-1,3-diamin (DMTDA) | 11,1 |
| Diethyltoluoldiamin (DETDA) | 1,1 |
| Quarzmehl | 2,3 |
| Quarzsand | 7,8 |
| Kieselsäure | 0,4 |
| | |
| Stöchiometrie Isocyanatgruppen: | 1,26:1 |
| Amingruppen (ermittelt anhand der Äquivalentgewichte) | |
| Verhältnis (w/w) DMTDA: DETDA | 10:1 |
| Auszugskraft bei -5°C in kN | 30,2 |
| Auszugskraft bei 5°C in kN | 26,6 |
| Auszugskraft bei 20°C in kN | 27,4 |
| Auszugskraft bei 40°C in kN | 26,4 |

Aus Tabelle 3 ist zu entnehmen, dass die Auszugskraft bei -5°C, 5°C und 40°C der Auszugskraft bei der Referenztemperatur 20°C ähnlich ist. Dies zeichnet die beschriebene Mörtelmasse gegenüber herkömmlichen Mörtelmassen aus, welche bei Temperaturen deutlich unterhalb bzw. oberhalb von Raumtemperatur (23°C) häufig keine guten Auszugskraft-Werte mehr erzielen.

## Patentansprüche

1. Mehrkomponenten-Harzsystem umfassend:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B) umfassend Diethyltoluoldiamin (DETDA) und ein Isomerengemisch aus 6-Methyl-2,4-bis(methylthio)phenylen-1,3-diamin und 2-Methyl-4,6-bis(methylthio)phenylen-1,3-diamin (DMTDA),
- wobei das DMTDA und das DETDA in einem Mengenverhältnis (DMTDA:DETDA) von etwa 17:1 bis etwa 1:1 (w/w), bevorzugt von etwa 15:1 bis etwa 1:1 (w/w), bevorzugter von etwa 12:1 bis etwa 1,5:1 (w/w), bevorzugter von etwa 10:1 bis etwa 1,5:1 (w/w), noch bevorzugter von etwa 6:1 bis etwa 1,5:1 (w/w) vorliegen.

2. Mehrkomponenten-Harzsystem nach Anspruch 1, wobei die Isocyanatkomponente (A) und die Aminkomponente (B) in einem Mengenverhältnis vorliegen, bei dem das numerische Verhältnis von mittlerer NCO-Funktionalität in der Isocyanatkomponente (A) zu mittlerer NH-Funktionalität in der Aminkomponente (B) von 0,3 bis 2,0, bevorzugt von 0,7 bis 1,8, weiter bevorzugt von 1,0 bis 1,5, und am meisten bevorzugt von 1,0 bis 1,3 beträgt.

3. Mehrkomponenten-Harzsystem nach einem der vorstehenden Ansprüche, wobei das mindestens eine aliphatische oder cycloaliphatische Polyisocyanat ein Polyisocyanat auf Basis eines Isocyanats mit einem Kohlenstoffgrundgerüst mit 3 bis 30 Kohlenstoffatomen, bevorzugter mit 4 bis 20 Kohlenstoffatomen, ist; noch bevorzugter ein Polyisocyanat auf Basis eines Isocyanats ausgewählt aus der Gruppe bestehend aus Hexamethylendiisocyanat (HDI), Trimethyl-HDI (TMDI), Pentandiisocyanat (PDI), 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornat (NBDI), 3(4)-lsocyanatomethyl-1-methyl-cyclohexylisocyanat (IMCI) und 4,4'-Bis(isocyanatocyclohexyl)methan (H₁₂MDI) und Mischungen aus zwei oder mehr davon ist.

4. Mehrkomponenten-Harzsystem nach einem der vorstehenden Ansprüche, wobei das mindestens eine Polyisocyanat ein Polyisocyanat auf Basis eines Isocyanats ausgewählt aus der Gruppe bestehend aus Hexamethylendiisocyanat (HDI), Pentandiisocyanat (PDI), Isophorondiisocyanat (IPDI) und Mischungen aus zwei oder mehr davon ist, bevorzugt ein Hexamethylen-1,6-diisocyanat-Homopolymer oder eine Mischung aus einem Hexamethylen-1,6-diisocyanat-Homopolymer und einem Hexamethylen-1,6-diisocyanat-Biuret-Oligomerisationsprodukt ist.

5. Mehrkomponenten-Harzsystem nach einem der vorstehenden Ansprüche, wobei der Gesamtanteil aus DMTDA und DETDA an der Gesamtmenge an gegenüber Isocyanatgruppen reaktiven Aminen in der Aminkomponente (B) 50 Gew.-% oder höher, bevorzugt 80% oder höher beträgt.

6. Mehrkomponenten-Harzsystem nach einem der vorstehenden Ansprüche, wobei DMTDA und DETDA die einzigen Amine in der Aminkomponente sind.

7. Mehrkomponenten-Harzsystem nach einem der vorstehenden Ansprüche, wobei das Mehrkomponenten-Harzsystem ein Zweikomponenten-Harzsystem ist.

8. Mehrkomponenten-Harzsystem nach einem der vorstehenden Ansprüche, wobei die Isocyanatkomponente (A) und/oder die Aminkomponente (B) des Weiteren mindestens einen Füllstoff umfasst.

9. Verwendung des Mehrkomponenten-Harzsystems nach einem der vorstehenden Ansprüche als Klebstoff, insbesondere als Klebstoff zur Befestigung von Konstruktionselementen an einem Bauwerk oder an einem Teil eines Bauwerks.

10. Harzmasse hergestellt durch das Vermischen der Isocyanatkomponente (A) und der Aminkomponente (B) des Mehrkomponenten-Harzsystem nach einem der vorstehenden Ansprüche.

11. Verwendung des Mehrkomponenten-Harzsystems gemäß irgendeinem der Ansprüche 1 bis 9 oder der Harzmasse nach Anspruch 10 als chemischer Dübel zur Befestigung von Konstruktionselementen in Löchern oder Spalten in Bauwerken oder Bauwerksteilen.

12. Die Verwendung gemäß Anspruch 9 oder 11, wobei die Verwendung bei Temperaturen unterhalb von etwa 0°C erfolgt, bevorzugt bei etwa -5°C oder weniger, bevorzugter bei etwa -10°C oder weniger.

13. Verwendung von DETDA zur Herabsetzung der Untergrundtemperatur, bei der noch 80%, bevorzugt noch 90% der Verbundspannung bei einer Untergrundtemperatur von 23°C erzielt werden, indem in einem Mehrkomponenten-Harzsystem umfassend:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B) umfassend ein Isomerengemisch aus 6-Methyl-2,4-bis(methylthio)phenylen-1,3-diamin und 2-Methyl-4,6-bis(methylthio)phenylen-1,3-diamin (DMTDA),
das DMTDA teilweise durch das DETDA ersetzt wird.

14. Verwendung von DETDA zur Senkung der Verarbeitungszeit eines Mehrkomponenten-Harzsystems, indem in einem Mehrkomponenten-Harzsystem umfassend:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B) umfassend ein Isomerengemisch aus 6-Methyl-2,4-bis(methylthio)phenylen-1,3-diamin und 2-Methyl-4,6-bis(methylthio)phenylen-1,3-diamin (DMTDA),
das DMTDA teilweise durch das DETDA ersetzt wird.

15. Verwendung von DETDA zur Senkung der Aushärtedauer eines Mehrkomponenten-Harzsystems, indem in einem Mehrkomponenten-Harzsystem umfassend:
- eine Isocyanatkomponente (A) umfassend mindestens ein aliphatisches oder cycloaliphatisches Polyisocyanat mit einer mittleren NCO-Funktionalität von etwa 2 oder größer, und
- eine Aminkomponente (B) umfassend ein Isomerengemisch aus 6-Methyl-2,4-bis(methylthio)phenylen-1,3-diamin und 2-Methyl-4,6-bis(methylthio)phenylen-1,3-diamin (DMTDA),
das DMTDA teilweise durch das DETDA ersetzt wird.
